# EUROPÄISCHE PATENTSCHRIFT

(11) **EP 2 397 845 B1**
(45) Veröffentlichungstag und Bekanntmachung des Hinweises auf die Patenterteilung: **17.07.2013**
(21) Anmeldenummer: 11166246.6
(22) Anmeldetag: 16.05.2011
(51) Int. Cl.: G01N 21/78

(54) **Messverfahren für einen thermischen Prozess**
Measuring method for a thermal process
Procédé de mesure pour un processus thermique

(30) Priorität: 17.06.2010 DE 102010030206
(43) Veröffentlichungstag der Anmeldung: 21.12.2011
(73) Patentinhaber: Robert Bosch GmbH, 70442 Stuttgart (DE)
(72) Erfinder: Martinez Tomalino, Lars-Owe, 96052, Bamberg (DE); Haluschka, Christoph, 96129, Strullendorf (DE)

(56) Entgegenhaltungen:
- US-A1- 2005 042 136
- US-B1- 7 063 813
- Huang ET AL: "In Situ Measurements on Sintering Kinetics of PZT Ceramics", Proceedings 10th International Conference Ceramic Society ECERs, Berlin 2007, 21. Juni 2007 (2007-06-21), XP55026202, Gefunden im Internet: URL:http://www.ecers2007berlin.de/abstract s_files/manuscript_files/_5/_cd_manuskript s/1350.pdf [gefunden am 2012-05-04]
- TANAKA Y ET AL: "Study of highly sensitive smell sensing system using gas detector tube combined with optical sensor", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 119, Nr. 1, 24. November 2006 (2006-11-24), Seiten 84-88, XP027971619, ISSN: 0925-4005 [gefunden am 2006-11-24]

## Beschreibung

### Stand der Technik

Die Erfindung betrifft ein Messverfahren für einen thermischen Prozess, insbesondere zur Bestimmung eines lokalen Bleioxid-Dampfdrucks in Sinteröfen.

Aus der DE 100 62 672 A1 ist ein Verfahren zur Herstellung eines Bauelements bekannt. Bei dem bekannten Verfahren wird ein Stapel von einen Binder enthaltenden keramischen Grünfolien und Elektrodenschichten durch Stapeln und anschließendes Laminieren der Grünfolien beziehungsweise der Elektrodenschichten hergestellt. Dann wird der Stapel in einer Atmosphäre, die Inertgas und Sauerstoff enthält, entbindert, wobei der Sauerstoffgehalt durch Zudosieren einer geeigneten Menge Wasserstoffgas oder durch Getterung so reduziert wird, dass die Elektrodenschichten nicht beschädigt werden. Nach der Entbinderung wird der Schichtstapel bei einer Temperatur, die kleiner ist als der Schmelzpunkt der Elektrodenschichten, gesintert, wobei für die Sinterung eine Atmosphäre verwendet wird, die Stickstoff, Wasserstoff und Wasserdampf enthält. Hierbei wird der Sauerstoffpartialdruck durch eine geeignete Wasserstoffgaskonzentration eingestellt. Eine Maximaltemperatur wird für eine Dauer zwischen zwei und zwölf Stunden gehalten. Speziell können hierdurch piezoelektrische Bauelemente mit Keramikschichten, die aus Bleizirkonattitanat gebildet sind, hergestellt werden.

Ein entscheidender Einflussparameter für das Sinterverhalten von Keramiken aus Bleizirkonattitanat ist der Bleioxid-Partialdruck und dessen lokale Verteilung im Sinterofen. Ein hoher Bleioxid-Partialdruck bedingt ein geringes Bleioxid-Konzentrationsgefälle zwischen Keramik und Umgebung, was zu einem geringen Sintermassenverlust, zu geringen Korngrößen und höheren Sekundärphasenkonzentrationen in der Keramik führt. Die beiden letztgenannten Größen beeinflussen entscheidend den Hub und die Dauerhaltbarkeit bei Piezo-Vielschichtaktoren. Eine Kontrolle der Bleioxid-Druckverhältnisse während des Prozessschritts des Sinterns kann in der Aktorfertigung nur anhand des Sintermasseverlusts und der Korngröße nachträglich grob abgeschätzt werden.

Eine lokale Bestimmung des Bleioxid-Partialdrucks im Ofen ist nicht möglich, da die Transferfunktion zwischen dem Bleioxid-Partialdruck und den Keramikeigenschaften nicht bekannt ist.

Auch das Dokument US 7 063 813 B1 beschreibt ein Verfahren zur Herstellung eines Bauelements, wobei der Sauerstoffpartialdruck zur Prozessüberwachung gemessen wird.

Das Dokument "In Situ Measurements on Sintering Kinetics of PZT Ceramics" (Huang ET AL; Proceedings 10th International Conference Ceramic Society ECERs, Berlin 2007, 21. Juni 2007 (2007-06-21)) beschreibt ein Messverfahren zur Überwachung eines Sinterungsprozesses, wobei die Dimensionen eines Bauelements thermooptisch erfasst werden.

Kolorimetrische Verfahren zur Messung einzelner Gase sind aus den Dokumenten US 200510042136 A1 und "Study of highly sensitive smell sensing system using gas detector tube combined with optical sensor" (TANAKA Y ET AL; SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 119, Nr. 1, 24. November 2006 (2006-11-24), Seiten 84-88) bekannt.

### Offenbarung der Erfindung

Das erfindungsgemäße Messverfahren mit den Merkmalen des Anspruchs 1 hat den Vorteil, dass ein Metalloxid-Partialdruck im Sinterofen lokal bestimmt werden kann. Speziell kann eine lokale Bleioxid-Druckverteilung im Sinterofen beim Sintern von Keramiken auf der Basis von Bleizirkonattitanat bestimmt werden.

Durch die in den Unteransprüchen aufgeführten Maßnahmen sind vorteilhafte Weiterbildungen des im Anspruch 1 angegebenen Messverfahrens möglich.

Durch die lokale Bestimmung des Bleioxid-Dampfdrucks ist es auch möglich, die Transferfunktion von lokalem Metalloxid-Druck, insbesondere Bleioxid-Druck, und den beobachteten Keramikeigenschaften zu bestimmen. Diese Transferfunktion bedeutet zum einen einen enormen Erkenntnisgewinn über das Sinterverhalten von Keramiken, insbesondere Bleizirkonattitanat-Keramiken, und ermöglicht zum anderen die gezielte Einstellung der Strömungsverhältnisse im Sinterofen zur optimierten Herstellung von Vielschichtaktoren auf der Basis von Bleizirkonattitantat oder dergleichen.

Vorteilhaft ist es, dass als Farbwert zur Bestimmung des lokalen Metalloxid-Partialdrucks ein mittlerer Blauwert und/oder ein mittlerer Gelbwert gewählt wird. Es konnte gezeigt werden, dass die mittleren Blau- und Gelbwerte des Sondenelements in einer Umgebung um ein Bauteil gut mit den durch Wägung bestimmten Masseverlusten der entsprechenden Bauteile korrelieren. Dadurch ist eine vorteilhafte Bestimmung des lokalen Metalloxid-Partialdrucks möglich.

Vorteilhaft ist es auch, dass der lokaler Metalloxid-Partilaldruck als ein lokaler Bleioxid-Partialdruck bestimmt wird. Hierdurch kann in vorteilhafter Weise ein Einsatz des Messverfahrens beim Sintern von Bleizirkonattitanat-Keramiken oder dergleichen erfolgen.

Vorteilhaft ist es auch, dass das Sondenelement als Sonden- und Haltegitter ausgestaltet ist, in dem die Bauteile angeordnet sind. Die Bauteile können hierbei als Piezoaktoren ausgestaltet sein, die durch den thermischen Prozess gesintert werden. Hierdurch kann direkt das Haltegitter für das Messverfahren herangezogen werden. Dadurch vereinfacht sich der Aufbau. Ferner ist es vorteilhaft, dass das Sondengitter aus einem Werkstoff gebildet ist, der auf einem Aluminiumoxid basiert. Speziell für den Fall von Bleioxid bietet sich Aluminiumoxid, insbesondere Al₂O₃, als Sondenmaterial an, wobei die Verfärbung auf der Adsorption des Bleioxids an Verunreinigungen aus Silizium beruht. Bei anderen Metalloxiden muss gegebenenfalls auf ein anderes Sondenmaterial zurückgegriffen werden, welches das Oxid adsorbiert und sich durch dieses verfärbt.

Vorteilhaft ist es auch, dass eine Porosität des Sondenelements so vorgegeben wird, dass eine Farbsättigung des Farbwerts, aus dem der lokale Metalloxid-Partialdruck bestimmt wird, während des thermischen Prozesses vermieden wird. Die Verfärbung des Materials des Sondenelements beruht auf der Adsorption des Oxids und hängt neben dem Reinheitsgrad des Materials auch von dessen Porosität ab. Somit gibt es die Möglichkeit, das Material abhängig von den in der Messung vorherrschenden Dampfdrücken auszuwählen, um sicherzustellen, dass im betrachteten Bereich keine Farbsättigung eintritt. Die Größe der Sonden wird entsprechend dem Chargierkonzept so gewählt, dass die Sonden den Sinterprozess nur unwesentlich beeinflussen.

In vorteilhafter Weise wird der lokale Metalloxid-Partialdruck aus einem mittleren, lokalen Farbwert der erfassten Verfärbung des Sondenelements bestimmt. Beispielsweise kann das Sondengitter mehrere Gitterplätze aufweisen, an denen die Bauteile anordenbar sind. Hierbei kann das Sondengitter in mehrere rechteckige, insbesondere quadratische, Umgebungen der Gitterplätze aufgeteilt sein, wobei in jeder Umgebung der mittlere lokale Farbwert für den zugeordneten Gitterplatz bestimmbar ist. Hierdurch vereinfacht sich speziell eine automatisierte Auswertung von Fotos des Sondengitters.

In vorteilhafter Weise kann die Korrelation zwischen den lokalen Verfärbungen des Sondenelements, das als ein Opferelement ausgebildet ist, und dem lokalen Masseverlust der Bauteile ermittelt werden. Vorteilhaft ist es dabei, dass das Sondenelement als Opferelement ausgebildet ist und dass die mittleren lokalen Farbwerte der Umgebungen von Positionen, die in Bezug auf einen benachbarten Riegel, der mehrere Bauteile umfasst, bestimmt sind, zum Bestimmen von Masseverlusten der einzelnen Bauteile in dem Riegel in Bezug zu einer Kalibrierung gesetzt werden, die aus einem Gesamtmasseverlust des Riegels und einer Gesamtverfärbung des Opferelements bestimmt wird. Ferner ist es vorteilhaft, dass eine Länge des Opferelements zumindest näherungsweise gleich einer Länge des Riegels ist und dass das Opferelement an einer Längsseite des Riegels ausgerichtet ist.

Möglich ist es auch, dass Mittelwerte der mittleren lokalen Farbwerte von mehreren bei unterschiedlichen Temperaturen und/oder unterschiedlichen Haltezeiten durchgeführten thermischen Prozessen verwendet werden, um die Korrelation der mittleren lokalen Farbwerte mit den Masseverlusten der Bauteile an den zugehörigen Gitterplätzen beziehungsweise Positionen zu erhalten.

Aus der Verfärbung des Sondenelements kann auf den lokalen Partialdruck geschlossen werden. Dies kann sowohl beim Stacksintern als auch beim Riegelsintern genutzt werden.

Beim Stacksintern ist der Masseverlust durch Wägung nur aufwändig zu bestimmen, da aufgrund des lokal unterschiedlichen Matalloxid-Partialdrucks eine Wägung jedes einzelnen Bauteils erforderlich ist. Beim Stacksintern wird daher eine gewisse Anzahl an Piezoaktoren oder anderen Bauteilen einzeln in einem Sondengitter, das zugleich als Haltegitter dienen kann, angeordnet. Entsprechend dem lokalen Metalloxid-Partialdruck ergibt sich dann eine lokal unterschiedliche Verfärbung des Sondengitters. Die lokale Verfärbung des Sondengitters in der Umgebung des jeweiligen Bauteils kann dann zur Bestimmung des Masseverlusts dieses Bauteils dienen.

Beim Riegelsintern wird ein Riegel für mehrere Bauteile gesintert. Erst nach dem Sintern wird der Riegel in die einzelnen Bauteile aufgeteilt. Dies kann zum Beispiel durch Auseinandersägen erfolgen. Der Masseverlust des gesamten Riegel kann durch Wägung bestimmt werden. Der lokal unterschiedliche Masseverlust des Riegels, der sich aufgrund des lokal unterschiedlichen Metalloxid-Partialdrucks ergibt, kann in Bezug auf das einzelne Bauteil prinzipbedingt durch Wägung nicht bestimmt werden. Ein Grund ist der beim Sägen auftretende Materialverlust, der eine eindeutige geometrische Aufteilung und Zuordnung unmöglich macht. Allerdings kann beispielsweise neben den Riegel ein an der Längsseite des Riegels ausgerichtetes Opferelement, insbesondere eine Opferplatte, angeordnet werden. An der Opferplatte treten dann während des Sinters lokal unterschiedliche Verfärbungen auf, die aufgrund der räumlichen Nähe mit dem lokalen Masseverlust am Riegel korrelieren. Somit ist durch eine Farbauswertung am Opferelement der Masseverlust auch für das im Riegel enthaltene und später durch Aufteilen vereinzelte Bauteil bestimmbar. Diese Auswertung kann in zwei wesentlichen Schritten erfolgen. Im ersten Schritt wird der Gesamtmasseverlust des Riegels gemessen, was durch Wiegen erfolgt. Außerdem wird im ersten Schritt die Gesamtverfärbung des Opferelements bestimmt. Dies erfolgt durch Integrieren, was in der Praxis beispielsweise durch Aufsummieren an den einzelnen Bildpunkten einer digitalen Aufnahme des Opferelements möglich ist. Somit kann im ersten Schritt eine Kalibrierung erfolgen, indem die Gesamtverfärbung mit dem Gesamtmasseverlust in Beziehung gebracht wird. Im zweiten Schritt wird dann der lokale Masseverlust aus der lokalen Verfärbung bestimmt, wobei auf die Kalibrierung aus dem ersten Schritt zurückgegriffen wird. Beispielsweise kann für eine Teilfläche auf dem Opferelement eine Integration oder Summation durchgeführt werden, wobei die Teilfläche auf dem Opferelement in Bezug auf das jeweils angrenzende Bauteil im Riegel bestimmt ist. Nach der Aufteilung des Riegels durch Sägen oder dergleichen ist dann für jedes einzelne Bauteil beispielsweise ein individueller relativer Masseverlust bestimmt.

Somit können sowohl beim Stacksintern als auch beim Riegelsintern auf einfache Weise, insbesondere durch Auswertung einer digitalen Aufnahme, zusätzliche Informationen über den Sinterprozess erhalten werden. Damit können einzelne Prozessschritte des Sinterns kontrolliert und eingestellt werden. Auch ein laufendes Nachregeln während des Betriebs ist möglich.

Beim Riegelsintern kann zwischen je zwei Opferplatten jeweils einer der Riegel angeordnet sein. Dadurch ist eine weitgehende Erfassung der lokalen Masseverluste an mehreren Riegeln während des Sinterns möglich. Hierbei können die Opferplatten in vorteilhafter Weise als Sondenelemente dienen.

Beim Stacksintern werden die Piezoaktoren somit als einzelne Stacks gesintert, wobei diese auf einem Setter angeordnet und mit Hilfe des Haltegitters ausgerichtet sind. Beim Riegelsintern wird ein ganzer Riegel bestehend aus beispielsweise 19 bis 25 Einzelstacks als ganzes gesintert und erst nach der thermischen Prozessierung in Einzelstacks getrennt. Die beiden Prozessarten finden in unterschiedlichen Ofentypen statt, nämlich das Stacksintern vorzugsweise in Batchöfen und das Riegelsintern vorzugsweise in einem Durchschubofen, und außerdem werden beim Riegelsintern andere Sinterhilfsmittel verwendet, nämlich Chargierplatten statt Setterplatten und Opferplatten statt Haltegitter. Während es beim Stacksintern möglich ist, den Masseverlust duch Wägung vor und nach dem Sintern zu ermitteln, gibt es beim Riegelsintern hierfür keine Möglichkeit, da nur der Masseverlust des Gesamtriegels durch Wägung bestimmt werden kann. Damit ermöglicht die Farbauswertung der verfärbten Opferplatte eine solche sonst nicht mögliche Auswertung. Beim Stacksintern kann die Auswertung der Verfärbung dazu verwendet werden, schnell und kostengünstig den Masseverlust eines jeden einzelnen Stacks auszuwerten.

Die Farbauswertung kann auf unterschiedliche Weise zur Anwendung kommen und genutzt werden. Eine Anwendung ist die Bestimmung des Masseverlustes, was sowohl für stackals auch für riegelgesinterte Aktoren und andere Bauteile möglich ist. Eine weitere Anwendung ist die Bestimmung der lokalen Bleioxid-Partialdruckverteilung (PbO-Partialdruckverteilung) innerhalb des Ofens während des Sinterprozesses. Diese kann zum einen direkt an den Sinterhilfsmitteln mit untersucht werden, insbesondere an einem Haltegitter oder einer Opferplatte. Zum anderen kann diese aber auch an zusätzlichen Sondenelementen, die im Ofen verteilt sind, durchgeführt werden, da aufgrund der Keramikeigenschaften der Aktoren die lokale PbO-Verteilung um die Aktoren während des Sinterns in der Regel ganz gut abgeschätzt werden kann, in anderen Bereichen des Ofens aber in der Regel völlig unbekannt ist.

### Kurze Beschreibung der Zeichnungen

Bevorzugte Ausführungsbeispiele der Erfindung sind in der nachfolgenden Beschreibung anhand der beigefügten Zeichnungen näher erläutert. Es zeigt:
Fig. 1 eine schematische Darstellung einer fotografischen Aufnahme eines Sondengitters nach der Durchführung eines thermischen Prozesses zur Erläuterung des Messverfahrens der Erfindung;
Fig. 2A, Fig. 2B und Fig. 2C Korrelationen der RGB-Mittelwerte und dem mittleren Masseverlust für Haltegitter aus Sinterverläufen verschiedener Temperaturen, Entbinderzeiten und verschiedenen Setterbesätzen sowie unterschiedlichen Öfen;
Fig. 3A, Fig. 3B und Fig. 3C Korrelationen zwischen den lokalen Grau- und Farbwerten und dem Masseverlust der Bauteile für Sondengitter aus unterschiedlichen Sinterverläufen.

### Ausführungsformen der Erfindung

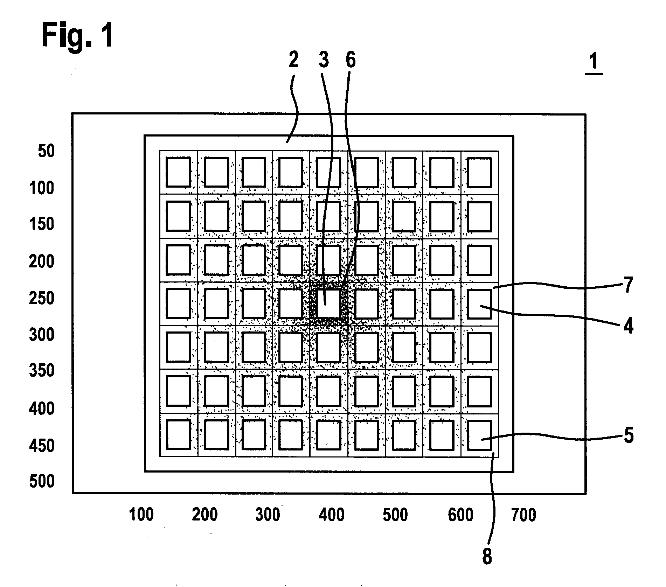

Fig. 1 zeigt eine schematische Darstellung einer fotografischen Aufnahme 1 eines Haltegitters 2, das zum Halten von piezokeramischen Aktoren während eines Sinterprozesses und als Sondengitter 2 dient. Das Sintern von Bauteilen in Form von Einzelstacks in der Herstellung von Bleizirkonattitanat-Vielschichtaktoren erfolgt auf Settern, wobei die Stacks mittels des Haltegitters 2 angeordnet werden. Auf Grund der Anordnung der Aktoren bildet sich über dem Haltegitter eine Bleioxid-Partialdruckverteilung, welche in dem in der Fig. 1 dargestellten Fall an einem mittleren Gitterplatz 3 in der Mitte des Haltegitters 2 höhere Drücke aufweist als am Rand des Gitters, beispielsweise an einem Gitterplatz 4 oder einem Gitterplatz 5. Dies zeigt sich bei Untersuchung der gesinterten Bauteile am Masseverlust und an den Korngrößen. So ist der Masseverlust von Bauteilen, die an den Gitterplätzen 4, 5, das heißt am Rand des Haltegitters 2, gesintert worden sind, größer im Vergleich zu Bauteilen, die am mittleren Gitterplatz 3 oder in der Nähe des mittleren Gitterplatzes 3 gesintert worden sind. Entsprechend ist auch die Korngröße der am Rand des Haltegitters 2 gesinterten Bauteile größer als die Korngröße der im Bereich der Mitte des Haltegitters 2 gesinterten Bauteile. Gleichzeitig zeigt das Haltegitter 2 eine Verfärbung, die sich analog zur Bleioxid-Partialdruckverteilung verhält. Am Rand, wobei ein geringerer Bleioxid-Partialdruck vorherrscht, ist die Verfärbung deutlich geringer als in der Mitte des Haltegitters 2 mit entsprechend größerem Bleioxid-Partialdruck. Beispielsweise ist das Haltegitter 2 in einer Umgebung 6 des mittleren Gitterplatzes 3 deutlich stärker verfärbt als in einer Umgebung 7 des Gitterplatzes 4 oder einer Umgebung 8 des Gitterplatzes 5.

Somit ist die Verfärbung des Haltegitters 2 nach dem Sinterprozess analog zur lokalen Bleioxid-Dampfdruckverteilung im Bereich des Haltegitters 2 während des Sinterns.

Somit liegt eindeutig eine Korrelation zwischen dem lokalen Bleioxid-Partialdruck und der Verfärbung des Haltegitters 2 vor, die dazu verwendet werden kann, durch Verwendung geeigneter Sonden und einer quantitativen Auswertung der Verfärbung anhand der RGB-Werte der Verfärbung den Bleioxid-Partialdruck am Ort der Sonde zu ermitteln. Die quantitative Auswertung der Verfärbung kann beispielsweise durch Fotografieren des als Sonde dienenden Haltegitters und Einlesen der Werte in eine geeignete Software erfolgen.

Zur quantitativen Bestimmung des Bleioxid-Partialdrucks wird eine Kalibrierung durchgeführt. Die Kalibrierung wird derart durchgeführt, dass eine Korrelation der Farbwerte von verfärbten Haltegittern (Sondenelementen) 2 und dem definiert eingestellten Bleioxid-Dampfdrücken in einem Kalibrierversuch ermittelt wird. Eine ähnliche Auswertung wurde bereits erfolgreich angewendet, um den Masseverlust von Einzelstacks zu ermitteln. Es konnte gezeigt werden, dass die mittleren Blau- und Gelbwerte des Haltegitters in der jeweiligen quadratischen Umgebung um einen Aktor, wie es in der Fig. 1 anhand der Umgebungen 6, 7, 8 veranschaulicht ist, gut mit den durch Wägung bestimmten Masseverlusten der entsprechenden Aktoren korreliert.

Als Material für die als Sonden eingesetzten Haltegitter 2 eignet sich besonders ein Aluminiumoxid aus Al₂O₃, aus dem auch die Haltegitter 2 für den thermischen Prozess des Sinterns hergestellt sind. Die Verfärbung dieses Materials beruht auf der Adsorption des Bleioxids an Verunreinigung des Al₂O₃ aus Silizium und hängt neben dem Reinheitsgrad des Materials auch von dessen Porosität ab. Somit kann das Material in Abhängigkeit von den in der Messung vorherrschenden Dampfdrücken ausgewählt werden, um sicherzustellen, dass im betrachtenden Bereich keine Farbsättigung eintritt. Die Größe der als Sonden dienenden Sondengitter 2 wird entsprechend dem Chargierkonzept so gewählt, dass die Sonden den Sinterprozess nur unwesentlich beeinflussen.

Zusätzlich zur optischen Auswertung kann durch eine Wägung der Sonden vor und nach dem Sinterprozess die Massezunahme und damit die Masse an adsorbiertem Bleioxid bestimmt werden. Auch diese Zunahme sollte mit dem entsprechenden Bleioxid-Dampfdruck am Ort der Sonde übereinstimmen, wobei der Messgenauigkeit im Vergleich zur optischen Auswertung in der Regel geringer ist.

Somit kann die Dampfdruckverteilung im Sinterofen während des Sinterprozesses gemessen werden. Dadurch ist eine Optimierung der Strömungsverhältnisse sowie der Probenanordnung im Sinterofen möglich, wodurch eine Einengung der Eigenschaftsstreuung von Bleizirkonattitanat-Aktoren sowie eine Erhöhung der Gutausbringung erreicht werden kann.

Das Messverfahren kann in allen thermischen Prozessen eingesetzt werden, bei denen der lokale Partialdruck eines Metalloxids gemessen werden soll. Für den Fall von Bleioxid bietet sich besonders Al₂O₃ als Sondenmaterial an. Bei anderen Metalloxiden muss gegebenenfalls auf ein anderes Sondenmaterial ausgewichen werden, welches das Oxid adsorbiert und sich durch dieses verfärbt.

In vorteilhafter Weise kann der Sintermasseverlust von Bleizirkonattitanat-Keramiken optisch bestimmt werden. Das Messverfahren kann hierbei auch als frühzeitiges Qualitätsbewertungsmerkmal für die hergestellten Aktoren dienen. Beim Prozess Riegelsintern kann durch das Messverfahren eine Bestimmung des Masseverlusts eines Einzelaktors durchgeführt werden, was prinzipbedingt durch Wägen oder dergleichen sonst nicht möglich ist.

Die Masseverlustbestimmung eignet sich als Verfahren zur Qualitätsbewertung nach dem Prozessschritt des Sinterns in der Aktorfertigung. Hierbei kann eine Masseverlustbestimmung an einer definierten Auswahl von beispielsweise zwei bis vier Aktoren je Setter durch Wägung vor und nach dem Sintern erfolgen. Hierbei besteht eine Korrelation zwischen dem Masseverlust und den Korngrößen, die in der Keramik beim Sintern entstehen, wobei ein größerer Masseverlust in der Regel größere Körner bedeutet. Die Korngröße korreliert wiederum mit der Zielgröße des Aktorhubs. Bei einem sehr hohen Masseverlust wird die Keramik brüchig und der Innenwiderstand sinkt. Ein zu geringer Masseverlust bedeutet dagegen einen höheren Anteil an der Sekundärphase des Bleioxids in der Keramik. Dies kann bei eindringender Feuchtigkeit zu einer Sekundärphasenzersetzung in der Keramik und damit zum Ausfall des Aktors im Betrieb führen. Somit ist der Masseverlust ein wichtiges Merkmal zur frühzeitigen Bewertung der Aktorqualität. Speziell für den Prozess des Riegelsinterns ist ein Messverfahren zur Bestimmung des Masseverlusts von Bedeutung.

Das Sondengitter 2 kann je nach Ausgestaltung des thermischen Prozesses ausgestaltet sein. Speziell kann das Sondengitter 2 als Sinterhaltegitter 2 beim Einzelstacksintern oder als Opferplatte 2 beim Riegelsintern dienen. Das Haltegitter 2 verfärbt sich beim Sintern. Dabei nimmt im relevanten Temperaturbereich die Verfärbung mit zunehmendem Masseverlust ab. Es besteht eine direkte, globale und lokale Korrelation zwischen der Intensität der Verfärbung, die durch Grauwerte der fotografischen Aufnahme 1 erfasst werden kann, den Gelb- sowie den Blauwerten und dem Masseverlust. Eine optische Bewertung der fotografischen Aufnahme 1 des Haltegitters 2 ermöglicht somit die Bestimmung des Masseverlusts.

Das Messverfahren ermöglicht es, durch die automatisierte Auswertung von fotografischen Aufnahmen 1 der Haltegitter 2 den Masseverlust von riegelgesinterten Aktoren zu bestimmen. Beim Stacksintern wird die Bestimmung des Masseverlusts aller Aktoren durch eine Auswertung an den als Sinterhilfsmitteln dienenden Haltegittern 2 mit geringem Zeitaufwand und ohne Zusatzkosten ermöglicht, ohne dass die Masse vor und nach dem Sintern gemessen werden muss.

Speziell beim Stacksintern wird eine Verfärbung des Sinterhaltegitters 2 beobachtet. Dabei fällt auf, dass mit zunehmender Temperatur, was einer Zunahme des Masseverlusts entspricht, diese Verfärbung abnimmt. Die in der Fig. 1 veranschaulichte Verfärbung reduziert sich somit mit zunehmender Temperatur.

Beispielsweise können Sinterläufe mit einer Entbinderungszeit von 82 Stunden bei Temperaturen von 1010 °C, 1023 °C und 1048 °C durchgeführt werden. Hierbei können 58 Aktoren je Setter- beziehungsweise Haltegitter 2 gesintert werden. Der Masseverlust ist hierbei 1,10 % bei 1010 °C. Er ist 1,16 % bei 1023 °C. Und er ist 1,3% bei 1048 °C. Diese Werte beruhen hierbei auf einer möglichen Durchführung des thermischen Prozesses, wobei je nach Ausgestaltung des thermischen Prozesses auch andere Werte möglich sind. Hierbei hat sich gezeigt, dass mit zunehmender Temperatur die Verfärbung des Haltegitters 2 abnimmt.

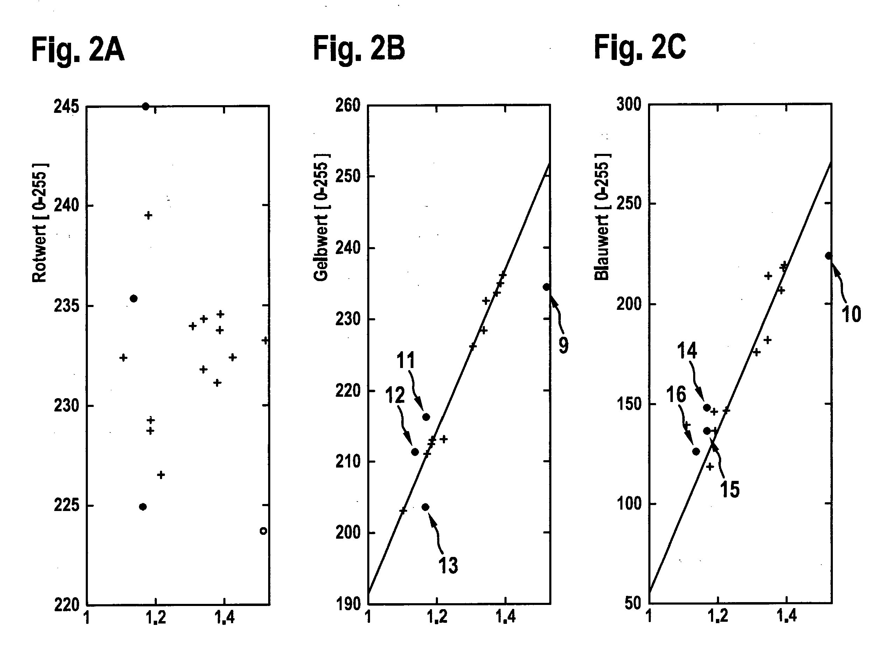

Fig. 2A, Fig. 2B und Fig. 2C zeigen die Korrelation der RGB-Mittelwerte und dem mittleren Masseverlust für Haltegitter 2 aus Sinterläufen bei verschiedenen Temperaturen von 1010 °C, 1023 °C und 1048 °C, bei Entbinderzeiten von 69 Stunden und 82 Stunden sowie bei verschiedenen Setterbesätzen mit 58 Aktoren je Setter, 30 Aktoren je Setter und 49 Aktoren je Setter sowie bei unterschiedlichen Öfen. Hierbei sind an den Abszissen jeweils der relative mittlere Masseverlust in Prozent angetragen. An den Ordinaten sind die Farbwerte angetragen, nämlich in der Fig. 2A der Rotwert, in der Fig. 2B der Gelbwert und in der Fig. 2C der Blauwert. Hierbei können einzelne Messwerte bei der Auswertung ignoriert werden, die in den Fig. 2A, 2B und 2C durch einen Kreis gekennzeichnet sind. Ursache hierbei können Ausreißer sein. Außerdem kann auch eine Sichtprüfung der gesinterten Aktoren oder der Sinterhilfsmittel, insbesondere des Haltegitters 2, erfolgen. Beispielsweise können helle Flecken auf Abstandshülsen und abgebrochene Ecken ein Grund sein, um den zugehörigen Messwert zu ignorieren.

Die Fig. 2B zeigt eine gute lineare Korrelation zwischen dem Gelbwert und dem Masseverlust, wie es die eingezeichnete Gerade einer Linearregression verdeutlicht. Entsprechend zeigt die Fig. 2C eine lineare Korrelation zwischen dem Blauwert und dem Masseverlust, wie es die eingezeichnete Gerade einer weiteren Linearregression verdeutlicht. Für hohe Masseverluste weicht der Verlauf vom linearen Verhalten erwartungsgemäß ab, denn eine hellere Farbe als Weiß ist nicht möglich, so dass solche Punkte 9, 10 nicht berücksichtigt werden. Weitere drei Punkte 11, 12, 13 in Fig. 2B beziehungsweise weitere drei Punkte 14, 15, 16 in Fig. 2C wurden ebenfalls nicht berücksichtigt, da sich hier Auffälligkeiten am Haltegitter 2 gezeigt haben, beispielsweise ein heller Fleck an einer Abstandshülse, bezüglich der Punkte 11, 13, 14, 15 und eine abgebrochene Ecke bezüglich der Punkte 12, 16.

Zur Bestimmung der lokalen Farbwerte um jeden der Gitterplätze, insbesondere der Gitterplätze 3, 4, 5, wird vorzugsweise jeweils der Mittelwert des Rot-, Gelb- und Blauwertes innerhalb der jeweiligen quadratischen Umgebung, insbesondere den quadratischen Umgebungen 6, 7, 8, um die Gitterplätze des Haltegitters 2 gebildet, wobei die Farbwerte der für die Bauelemente (Aktoren) vorgesehenen Aussparungen, die schwarz sind, nicht in die Mittelwertbildung einfließen.

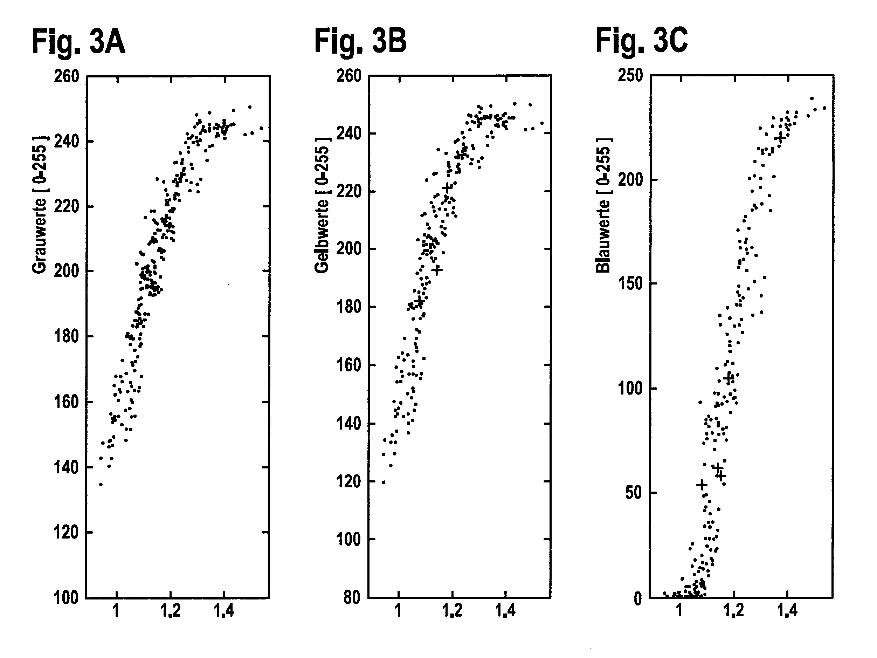

Um eine Korrelation der lokalen Verfärbung und des Masseverlusts eines Einzelstacks zu ermitteln, kann der mittlere Farbwert im Quadrat um eine Aussparung bestimmt und über dem jeweiligen Masseverlust aufgetragen werden. Beispielsweise kann der mittlere Farbwert in dem durch die Umgebung 6 gegebenen Quadrat um den Gitterplatz 3 bestimmt und über den Masseverlust des am Gitterplatz 3 gesinterten Einzelstacks aufgetragen werden. Dabei ergibt sich wiederum eine eindeutige Korrelation unabhängig von der Aktorart, der Sintertemperatur des Sinterofens oder des Setterbesatzes, wie es auch anhand der Fig. 3A, 3B und 3C veranschaulicht ist.

Fig. 3A, Fig. 3B und Fig. 3C zeigen die Korrelation zwischen den lokalen Grau- und Farbwerten und dem Masseverlust der Einzelstacks für Haltegitter 2 aus unterschiedlichen Sinterläufen. Hierbei sind an den Abszissen die relativen Masseverluste der Einzelstacks in Prozent angetragen. An der Ordinate der Fig. 3A ist der Grauwert angetragen. An der Ordinate der Fig. 3B ist der Gelbwert angetragen. Und an der Ordinate der Fig. 3C ist der Blauwert angetragen.

Die Mittelwerte der Einzelfarbwerte über dem der Einzelmasseverluste sind in den Diagrammen der Fig. 3A, 3B und 3C als Kreuze dargestellt und folgen zumindest näherungsweise dem gleichen Verlauf.

Auf der Opferplatte 2 kann sich beim Riegelsintern zwischen zwei Riegeln ein Farbverlauf ergeben, wobei zum Rand hin die Verfärbung immer stärker abnimmt, was für einen höheren Masseverlust des Riegels in diesen Bereichen spricht. Auch hierbei ergeben sich unterschiedliche Verfärbungen, die eindeutig zu erkennen sind.

Um die Korrelation zwischen lokaler Verfärbung der Opferplatte 2 und dem lokalen Masseverlust zu ermitteln, gibt es zwei Möglichkeiten. Zum einen kann eine Normierung des Verlaufs, wie er in den Fig. 2A, 2B und 2C dargestellt ist, über den Gesamtmasseverlust des Riegels beziehungsweise der Gesamtverfärbung der Opferplatte 2, was einer Verschiebung der Kurven nach links oder rechts zur Folge hat, erfolgen. Zum anderen können die Mittelwerte von verschiedenen Sinterläufen bei unterschiedlichen Temperaturen und eventuell unterschiedlichen Haltezeiten verwendet werden, um die Korrelation der Mittelwerte, welche der Korrelation der lokalen Werte entspricht, zu erhalten. Die lokale Bestimmung des Masseverlusts im Riegel und somit der einzelnen Aktoren ist bei Kenntnis der Korrelation somit möglich.

Daher kann durch die Bestimmung des Masseverlusts an riegelgesinterten Aktoren und einer entsprechenden Aussortierung von "schlechten" Aktoren die Gutausbringung erhöht werden. Aktoren, die im Betrieb potentiell ausfallen können, können hierdurch zuverlässig aussortiert werden, da nicht nur eine Stichprobe, sondern eine lückenlose Einzelbegutachtung durch das Messverfahren möglich ist.

Das Messverfahren ist für alle Sinterprozesse einsetzbar, in denen der Masseverlust relevant ist und bei denen eine Verfärbung von Sinterhilfsmitteln, insbesondere eines Haltegitters 2 oder einer Opferplatte, beobachtet werden kann. Speziell kann das Messverfahren zur Bestimmung des Masseverlusts von Aktoren, die durch Riegelsintern hergestellt werden, zur frühzeitigen Qualitätsbewertung der einzelnen Aktoren zum Einsatz kommen. Kritische Aktoren bezüglich des Masseverlusts im Hinblick auf Sekundärphasenzersetzung, das heißt zu geringem Masseverlust, oder zu geringem Innenwiderstand, das heißt zu hohem Masseverlust, können erkannt und frühzeitig aussortiert werden.

Die Erfindung ist nicht auf die beschriebenen Ausführungsbeispiele beschränkt.

## Patentansprüche

1. Messverfahren für einen thermischen Prozess, durch den in oder an zumindest einem Sondenelement (2) angeordnete Bauteile thermisch bearbeitet werden, wobei eine Verfärbung des Sondenelements (2) erfasst wird und wobei ein lokaler Metalloxid-Partialdruck aus zumindest einem Farbwert der erfassten Verfärbung des Sondenelements (2) bestimmt wird.

2. Messverfahren nach Anspruch 1,
**dadurch gekennzeichnet,**
**dass** als Farbwert zur Bestimmung des lokalen Metalloxid-Partialdrucks ein mittlerer Blauwert und/oder ein mittlerer Gelbwert gewählt wird.

3. Messverfahren nach Anspruch 1 oder 2,
**dadurch gekennzeichnet,**
**dass** der lokaler Metalloxid-Partialdruck als ein lokaler Bleioxid-Partialdruck bestimmt wird.

4. Messverfahren nach einem der Ansprüche 1 bis 3,
**dadurch gekennzeichnet,**
**dass** das Sondenelement (2) als Sondengitter (2) und/oder Haltegitter (2) ausgestaltet ist, in dem die Bauteile angeordnet sind, und/oder dass das Sondenelement (2) aus einem Werkstoff gebildet ist, der auf einem Aluminiumoxid basiert.

5. Messverfahren nach einem der Ansprüche 1 bis 4,
**dadurch gekennzeichnet,**
**dass** eine Porosität des Sondenelements (2) so vorgegeben wird, dass eine Farbsättigung des Farbwerts, aus dem der lokale Metalloxid-Partialdruck bestimmt wird, während des thermischen Prozesses vermieden wird.

6. Messverfahren nach einem der Ansprüche 1 bis 5,
**dadurch gekennzeichnet,**
**dass** der lokale Metalloxid-Partialdruck aus einem mittleren lokalen Farbwert der erfassten Verfärbung des Sondenelements (2) bestimmt wird.

7. Messverfahren nach Anspruch 6,
**dadurch gekennzeichnet,**
**dass** das Sondenelement (2) mehrere Gitterplätze (3, 4, 5) aufweist, an denen die Bauteile anordenbar sind, und dass in einer Umgebung (6, 7, 8) eines Gitterplatzes (3, 4, 5) der mittlere lokale Farbwert für diesen Gitterplatz (6, 7, 8) bestimmt wird.

8. Messverfahren nach Anspruch 7,
**dadurch gekennzeichnet,**
**dass** die Umgebung (6, 7, 8) des Gitterplatzes (3, 4, 5) einen rechteckigen Rand aufweist.

9. Messverfahren nach Anspruch 7 oder 8,
**dadurch gekennzeichnet,**
**dass** das Sondenelement als Opferelement ausgebildet ist und dass die mittleren lokalen Farbwerte der Umgebungen von Positionen, die in Bezug auf einen benachbarten Riegel, der mehrere Bauteile umfasst, bestimmt sind, zum Bestimmen von Masseverlusten der einzelnen Bauteile in dem Riegel in Bezug zu einer Kalibrierung gesetzt werden, die aus einem Gesamtmasseverlust des Riegels und einer Gesamtverfärbung des Opferelements (2) bestimmt wird.

10. Messverfahren nach Anspruch 7 oder 8,
**dadurch gekennzeichnet,**
**dass** eine Länge des Opferelements zumindest näherungsweise gleich einer Länge des Riegels ist und dass das Opferelement an einer Längsseite des Riegels ausgerichtet ist.

11. Messverfahren nach einem der Ansprüch 7 bis 9,
**dadurch gekennzeichnet,**
**dass** Mittelwerte der mittleren lokalen Farbwerte von mehreren bei unterschiedlichen Temperaturen und/oder unterschiedlichen Haltezeiten durchgeführten thermischen Prozessen verwendet werden, um eine Korrelation der mittleren lokalen Farbwerte mit den Masseverlusten der Bauteile an den zugehörigen Gitterplätzen (3, 4, 5) beziehungsweise Positionen zu erhalten.

## Claims

1. Measurement method for a thermal process, by which components arranged in or on at least one probe element (2) are thermally processed, wherein discolouration of the probe element (2) is detected and wherein a local metal oxide partial pressure is determined from at least one colour value of the detected discolouration of the probe element (2).

2. Measurement method according to Claim 1,
**characterized**
**in that** a mean blue value and/or a mean yellow value is chosen as the colour value for determining the local metal oxide partial pressure.

3. Measurement method according to Claim 1 or 2,
**characterized**
**in that** the local metal oxide partial pressure is determined as a local lead oxide partial pressure.

4. Measurement method according to one of Claims 1 to 3,
**characterized**
**in that** the probe element (2) is configured as a probe grid (2) and/or a holding grid (2) in which the components are arranged, and/or in that the probe element (2) is formed from a material based on an aluminium oxide.

5. Measurement method according to one of Claims 1 to 4,
**characterized**
**in that** a porosity of the probe element (2) is predefined in such a way that colour saturation of the colour value from which the local metal oxide partial pressure is determined is avoided during the thermal process.

6. Measurement method according to one of Claims 1 to 5,
**characterized**
**in that** the local metal oxide partial pressure is determined from a mean local colour value of the detected discolouration of the probe element (2).

7. Measurement method according to Claim 6,
**characterized**
**in that** the probe element (2) has a plurality of grid sites (3, 4, 5) at which the components can be arranged, and in that, in an environment (6, 7, 8) of a grid site (3, 4, 5), the mean local colour value for this grid site (6, 7, 8) is determined.

8. Measurement method according to Claim 7,
**characterized**
**in that** the environment (6, 7, 8) of the grid site (3, 4, 5) has a rectangular periphery.

9. Measurement method according to Claim 7 or 8,
**characterized**
**in that** the probe element is in the form of a sacrificial element, and in that the mean local colour values of the environments of positions which are determined in respect of an adjacent bolt comprising a plurality of components are set for determining losses in mass of the individual components in the bolt with respect to a calibration which is determined from an overall loss in mass of the bolt and an overall discolouration of the sacrificial element (2).

10. Measurement method according to Claim 7 or 8,
**characterized**
**in that** a length of the sacrificial element is at least approximately equal to a length of the bolt, and in that the sacrificial element is oriented on a longitudinal side of the bolt.

11. Measurement method according to one of Claims 7 to 9,
**characterized**
**in that** mean values of the mean local colour values of a plurality of thermal processes carried out at different temperatures and/or different holding times are used in order to obtain a correlation of the mean local colour values with the losses in mass of the components at the associated grid sites (3, 4, 5) or positions.

## Revendications

1. Procédé de mesure d'un processus thermique qui traite thermiquement des composants disposés dans ou sur au moins un élément de sonde (2) et dans lequel une coloration de l'élément de sonde (2) est détectée et une pression partielle locale d'oxyde métallique est déterminée à partir d'au moins une valeur colorimétrique de la coloration détectée sur l'élément de sonde (2).

2. Procédé de mesure selon la revendication 1, **caractérisé en ce qu'**une valeur moyenne de bleu et/ou une valeur moyenne de jaune sont sélectionnées comme valeur colorimétrique destinée à déterminer la pression partielle locale d'oxyde métallique.

3. Procédé de mesure selon les revendications 1 ou 2, **caractérisé en ce que** la pression partielle locale d'oxyde métallique est déterminée en tant que pression partielle locale d'oxyde de plomb.

4. Procédé de mesure selon l'une des revendications 1 à 3, **caractérisé en ce que** l'élément de sonde (2) est configuré comme grille de sonde (2) et/ou grille de maintien (2) dans lesquelles les composants sont disposés et/ou **en ce que** l'élément de sonde (2) est formé d'un matériau à base d'oxyde d'aluminium.

5. Procédé de mesure selon l'une des revendications 1 à 4, **caractérisé en ce que** la porosité de l'élément de sonde (2) est prédéterminée de manière à éviter pendant le processus thermique une saturation de la valeur colorimétrique à partir de laquelle la pression partielle locale d'oxyde métallique est déterminée.

6. Procédé de mesure selon l'une des revendications 1 à 5, **caractérisé en ce que** la pression partielle locale d'oxyde métallique est déterminée à partir d'une valeur colorimétrique locale moyenne de la coloration détectée sur l'élément de sonde (2).

7. Procédé de mesure selon la revendication 6, **caractérisé en ce que** l'élément de sonde (2) présente plusieurs emplacements de grille (3, 4, 5) sur lesquels les composants peuvent être disposés et **en ce que** la valeur colorimétrique locale moyenne d'un emplacement de grille (6, 7, 8) est déterminée dans l'environnement (6, 7, 8) de cet emplacement de grille (3, 4, 5).

8. Procédé de mesure selon la revendication 7, **caractérisé en ce que** l'environnement (6, 7, 8) de l'emplacement de grille (3, 4, 5) présente un bord rectangulaire.

9. Procédé de mesure selon les revendications 7 ou 8, **caractérisé en ce que** l'élément de sonde est configuré comme élément sacrifié et **en ce que** les valeurs colorimétriques locales moyennes sont déterminées sur les environnements de positions par rapport à un verrou voisin qui comporte plusieurs composants, pour déterminer les pertes de masse des différents composants du verrou imposées dans un étalonnage déterminé à partir de la perte totale de masse du verrou et de la coloration totale de l'élément sacrifié (2).

10. Procédé de mesure selon les revendications 7 ou 8, **caractérisé en ce que** la longueur de l'élément sacrifié est au moins approximativement identique à la longueur du verrou et **en ce que** l'élément sacrifié est aligné sur un côté longitudinal du verrou.

11. Procédé de mesure selon l'une des revendications 7 à 9, **caractérisé en ce que** les valeurs moyennes des valeurs colorimétriques locales moyennes de plusieurs processus thermiques exécutés à différentes températures et/ou pendant différents temps de maintien sont utilisées pour obtenir une corrélation entre les valeurs colorimétriques locales moyennes et les pertes de masse des composants prévus sur les emplacements de grille (3, 4, 5) associés ou sur les positions associées.
